# FASCICULE DE BREVET EUROPEEN

(11) **EP 2 753 852 B1**
(45) Date de publication et mention de la délivrance du brevet: **18.01.2017**
(21) Numéro de dépôt: 12754037.5
(22) Date de dépôt: 07.09.2012
(51) Int. Cl.: F16J 15/06

(54) **DISPOSITIF DE DEPLACEMENT RELATIF DE DEUX PIECES SOUS PRESSION DIFFERENTIELLE**
VORRICHTUNG ZUR RELATIVEN VERSCHIEBUNG ZWEIER TEILE UNTER DIFFERENZDRUCK
DEVICE FOR THE RELATIVE DISPLACEMENT OF TWO PARTS UNDER DIFFERENTIAL PRESSURE

(30) Priorité: 07.09.2011 FR 1157914
(43) Date de publication de la demande: 16.07.2014
(73) Titulaire: Commissariat à l'Énergie Atomique et aux Énergies Alternatives, 75015 Paris (FR)
(72) Inventeur: HUBERT, Sébastien, 33170 Gradignan (FR); ALONSO, Philippe, 33600 Pessac (FR)
(74) Mandataire: Ilgart, Jean-Christophe
(86) Numéro de dépôt international: PCT/EP2012/067569
(87) Numéro de publication internationale: WO 2013/034733

(56) Documents cités:
- WO-A1-2008/109097
- DE-C1- 4 436 224
- US-A1- 2010 135 751

## Description

L'invention présente a trait à un dispositif de déplacement relatif de deux pièces sous pression différentielle ; une de ses applications envisagées est la permutation sous vide de détecteurs impliquant des mesures sous vide, mais d'autres existent, comme la manoeuvre de tiroirs de vannes. On cherche à garantir un déplacement commode des pièces l'une devant l'autre quand un différentiel de pression positif existe entre un lieu extérieur aux pièces et un lieu situé entre les pièces, qui produit des forces d'écrasement des pièces l'une sur l'autre et des forces de frottement conséquentes. Il faut aussi maintenir l'étanchéité entre les pièces malgré leurs déplacements afin que subsiste le différentiel de pression.

C'est ainsi que certains phénomènes physiques doivent être observés successivement par des détecteurs différents, qu'on place successivement devant le lieu de mesure. La situation est plus délicate quand les observations doivent être effectuées sous vide ou plus généralement à pression réduite, et qu'il faut concilier le maintien du vide et la nécessité de mouvoir les détecteurs.

Une façon de procéder consiste à placer les deux détecteurs en entier dans une enceinte à vide commune et à les déplacer successivement devant le lieu de mesure. Elle ne peut fonctionner qu'avec certains détecteurs qui peuvent travailler sous vide (ce qui exclut par exemple les détecteurs refroidis par des liquides), et il faut aussi dans la pratique que les détecteurs soient suffisamment petits pour que l'encombrement du dispositif ne devienne pas excessif : c'est ainsi que les caméras sont généralement trop volumineuses pour qu'on leur applique cette façon de procéder.

Une autre façon de procéder consiste à monter et démonter successivement les détecteurs devant le lieu de mesure. L'avantage du dispositif est qu'il est simple et compatible avec la grande majorité des détecteurs. L'inconvénient réside dans les temps de montage et de démontage, ainsi que dans la nécessité de devoir alors généralement rompre le vide au montage des détecteurs, puis le rétablir quand le détecteur suivant est monté. De plus, la position invariable des détecteurs aux montages successifs n'est pas WO 2008/109097 A1 divulgue un dispositif de déplacement selon le préambule de la revendication 1.

L'invention a trait à un dispositif différent, qui concilie la facilité de permutation du premier dispositif et la possibilité de se contenter d'une enceinte à vide de faible volume, comme dans le second dispositif.

Sous une forme générale, l'invention concerne un dispositif de déplacement relatif de deux pièces assurant le maintien d'un différentiel de pression entre un lieu extérieur aux pièces et un lieu à pression plus petite situé entre les pièces, caractérisé en ce qu'une des pièces est polie et l'autre des pièces comporte un joint non déformable qui contient une réserve de lubrifiant et est comprimé entre les pièces. Les pièces comprennent des plaques et c'est entre les plaques que le joint est comprimé, l'une des plaques étant polie et l'autre portant le joint.

Les deux pièces contribuent à délimiter une enceinte à vide ou à pression réduite de faible volume avec le joint d'étanchéité. La partie externe des pièces demeure à pression ambiante. Aucune rupture d'étanchéité n'est produite pendant les déplacements des pièces l'une devant l'autre. La combinaison de la surface polie et du joint lubrifié garantit la faiblesse des frottements.

Il faut éviter un écrasement des plaques l'une sur l'autre, un serrage excessif du joint, et la destruction de celui-ci ou l'impossibilité de déplacer les pièces à cause de la force de rapprochement des plaques produite par la pression ambiante sur leurs faces extérieures. Il est à noter que ce problème d'écrasement du joint sous une pression différentielle n'apparaît qu'avec un joint essentiellement plan disposé entre deux portées de même forme, mais qu'il est absent des situations courantes où un arbre tournant est disposé dans un palier circulaire par l'intermédiaire d'un joint également circulaire qui l'entoure et où le joint sépare deux milieux à des pressions différentes des deux côtés de l'arbre et du palier : la pression différentielle exerce un effort latéral sur le joint, qui ne gêne aucunement la rotation de l'arbre.

Le joint rigide de l'invention maintient l'écartement entre les pièces et empêche donc la disparition du volume intermédiaire à pression réduite et l'accroissement des frottements qui serait consécutif à un contact direct des pièces. La lubrification du joint rigide réduit les frottements quand les pièces se déplacent l'une sur l'autre.

Le parallélisme des pièces est renforcé si un autre joint rigide est comprimé entre les pièces ; il est rectiligne et dirigé dans une direction de déplacement mutuel des pièces, disposé à une région centrale des pièces ; sa fonction est de limiter la déflexion des pièces l'une vers l'autre.

Le joint non déformable assure par lui-même l'étanchéité de l'intervalle entre les pièces s'il a un contour continu. Cela n'est toutefois pas obligatoire, puisqu'un deuxième joint peut être ajouté pour parfaire l'étanchéité ou l'assurer seul en cas de besoin : ce deuxième joint a un contour continu, et il est aussi comprimé entre les deux pièces ; il est souple mais son écrasement est limité par le joint non déformable, ce qui évite encore les frottements excessifs.

Quand les deux joints sont présents, ils sont avantageusement situés l'un autour de l'autre, voire concentriques, le deuxième joint, souple, étant situé à une région plus centrale des pièces que le joint non déformable.

La réserve de lubrifiant peut être constituée par une cavité creusée dans le joint et s'ouvrant vers la pièce polie. Par ailleurs, ce joint s'appuie avantageusement sur la pièce polie par au moins une face plane, et éventuellement par deux faces planes entre lesquelles la cavité se trouve de manière à avoir une surface de contact suffisante.

L'invention sera maintenant décrite en liaison aux figures suivantes, qui en illustrent une réalisation particulière :
- les figures 1 et 2 sont des représentations schématiques du dispositif à ses deux états principaux,
- les figures 3 et 4 sont deux vues du dispositif à des angles différents,
- la figure 5 illustre la face de la plaque mobile qui donne sur la cavité sous vide,
- la figure 6 est une section de la plaque mobile et des joints,
- et la figure 7 est une section générale du dispositif.

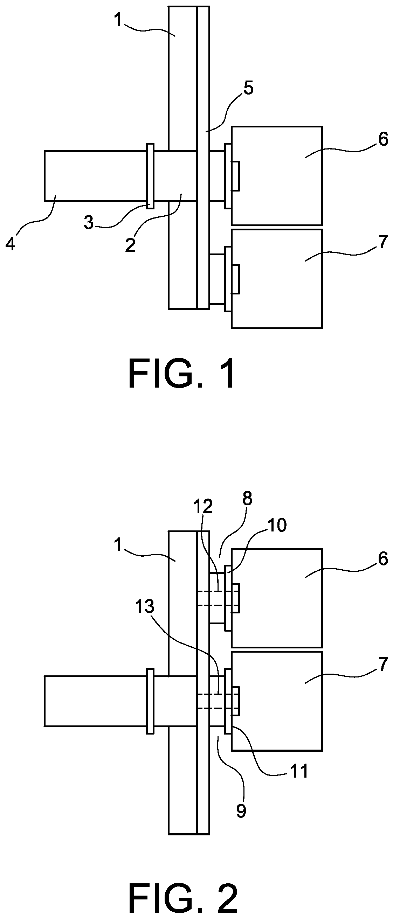

Ainsi qu'on le voit aux figures 1 et 2, un dispositif conforme à l'invention comprend une première pièce en forme de plaque 1 pourvue d'un lieu de mesure 2 qui peut être une ouverture donnant sur une enceinte à vide telle qu'un tube 4 abritant un faisceau de rayons X par une bride 3 de jonction, ou qui peut être un hublot, un réceptacle, etc. et une seconde plaque pièce en forme de 5 munie de deux empreintes 8 et 9 de détecteurs 6 et 7. Les empreintes 8 et 9 peuvent comprendre une bride 10 ou 11 de montage étanche au vide d'un des détecteurs 6 et 7 respectifs et des perçages 12 et 13 traversant la seconde plaque 5 et faisant communiquer les détecteurs 6 et 7 avec le volume entre les deux plaques 1 et 5, qui est maintenu sous vide. La seconde plaque 5 est mobile devant la première 1 de manière à placer chacun des détecteurs 6 et 7 tour à tour devant le lieu de mesure 2 pour permettre à chacun des détecteurs 6 et 7 d'accomplir sa mesure ou son observation.

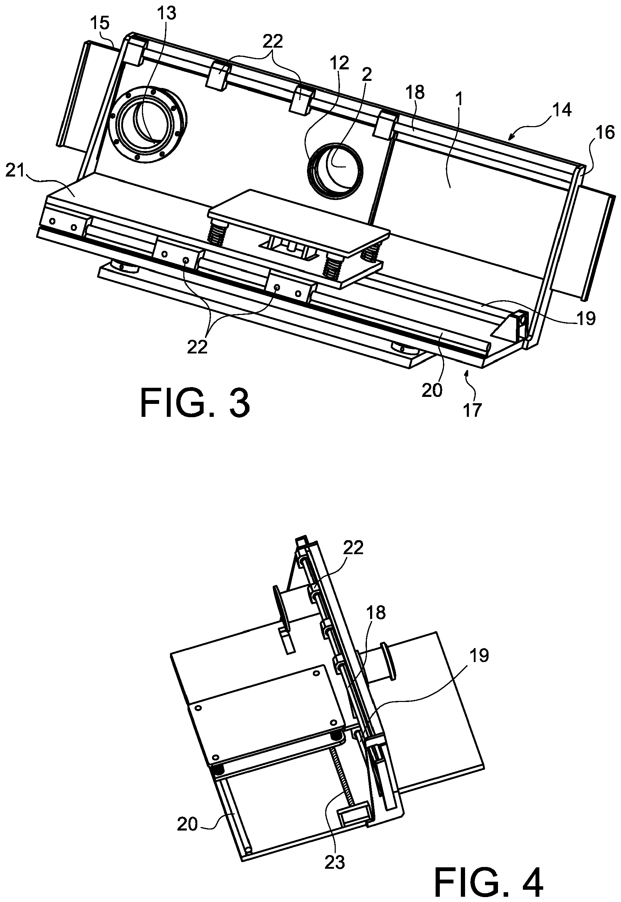

On va aborder ci-dessous une description plus détaillée de l'invention. Ainsi que le montre la figure 3, la première plaque 1 est encastrée dans un châssis 14 muni de deux nervures latérales 15 et 16 de raidissage. Le châssis 14 est uni à un support 17 qui lui est perpendiculaire. Des glissières 18, 19 et 20 sont établies sur le châssis 14 pour les deux premières, de part et d'autre de la première plaque 1, et sur le support 17 pour la troisième. La seconde plaque 5, parallèle à la première plaque 1, est unie à une plaque d'appui 21 perpendiculaire à elle et qui s'étend devant le support 17. Des griffes communément référencées par 22 assujettissent les deux bords de la première plaque 1 aux deux premières glissières 18 et 19, et le bord de la plaque d'appui 21 qui est opposé à la seconde plaque 5 à la troisième glissière 20. L'ensemble permet la translation alternative de la seconde plaque 5 sur la première plaque 1, les griffes 22 coulissant dans les glissières 18, 19 et 20, et il est assez souple pour qu'une cavité close et étanche puisse être établie entre les plaques 1 et 5 et que le vide soit maintenu dans celle-ci. Le déplacement peut être assuré par tout moyen connu, par exemple (figure 4) par une transmission comprenant un élément 23 linéaire s'étendant sur la plaque de support 17 parallèlement aux glissières et qui peut consister en une courroie, une vis sans fin, une crémaillère ou une barre coulissante mue par un moteur pas à pas non représenté, et qui est fixé à un élément complémentaire de la plaque d'appui 21. Les mouvements de la seconde plaque 5 sont limités par des interrupteurs de fin de course, à des positions où les empreintes 12 et 13 sont alignées avec le lieu de mesure 2 ; des butées mécaniques peuvent être ajoutées à titre de précaution, en cas de défaut des interrupteurs. les empreintes 12 et 13 s'alignent avec le lieu de mesure 2 lorsque la plaque 5 atteint l'interrupteur de fin de course fixé sur la plaque 17 à proximité de la transmission.

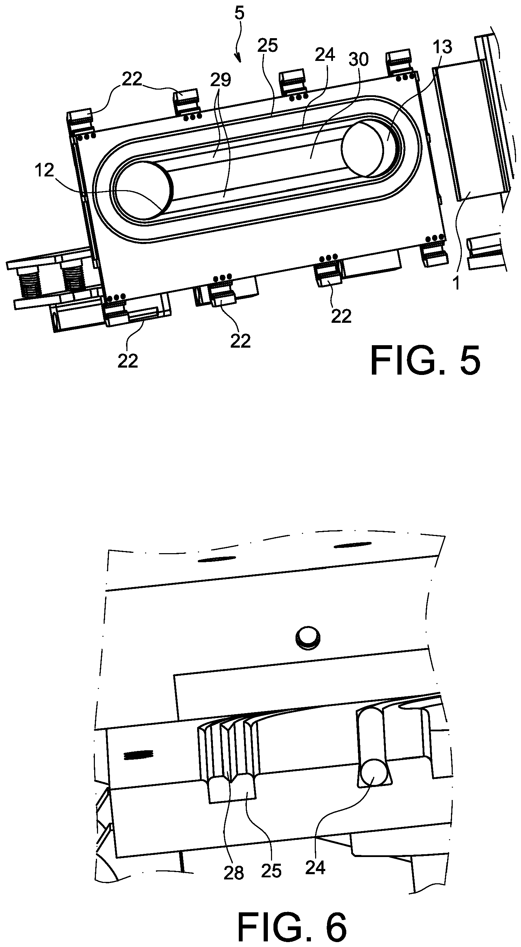

La figure 5 représente la seconde plaque 5 extraite du reste du dispositif et montre principalement sa face tournée vers la première plaque 1. On remarque un joint interne 24 à contour fermé et de forme à peu près elliptique entourant les empreintes 12 et 13, ainsi qu'un joint externe 25 entourant le précédent, aussi à contour fermé, et de forme analogue. La figure 6 montre que le joint interne 24 est torique, alors que le joint externe 25 est prismatique et comprend entre autres deux facettes planes 26 et 27 dirigées vers la première plaque 1 ; elles délimitent une cavité centrale 28 s'ouvrant sur la première plaque 1 et contenant une réserve de lubrifiant compatible au vide. Les joints 24 et 25 s'appuient sur la première plaque 1 et délimitent avec elle et la seconde plaque 5 une cavité close dans laquelle le vide peut être établi. Le joint externe 25 est en matière rigide, par exemple en PEEK (polyéther éther acétone) de manière à résister aux forces de compression dues au vide entre les plaques 1 et 5 sans être écrasé et donc sans tolérer de contacts entre les plaques 1 et 5. Sa superficie de contact avec la première plaque 1, par les facettes planes 26 et 27, est relativement faible pour limiter les forces de frottement. Sa construction avec une réserve de lubrifiant, cumulée avec une surface lisse de la première plaque 1, qui est polie, lui permet de glisser sur la première plaque 1 avec peu de frottement malgré la compression. Le joint interne 24 permet d'établir une seconde barrière d'étanchéité, grâce à sa souplesse qui lui permet de bien épouser les formes réelles des deux plaques 1 et 5. La figure 5 montre encore des gorges de communication 29 reliant les empreintes 12 et 13, afin d'y égaliser le vide, et un troisième joint 30, semblable par sa constitution au joint externe 25, qui s'étend parallèlement aux gorges 29, dans le sens de déplacement de la seconde plaque 5, de manière à s'appuyer aussi sur la première plaque 1 et empêcher les plaques 1 et 5 de fléchir à leur centre.

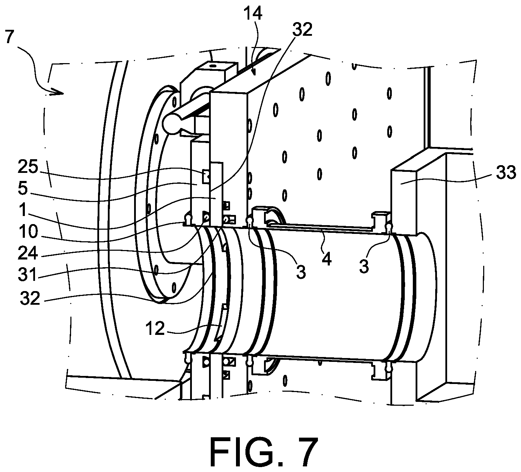

La figure 7 est enfin une vue partielle du dispositif, qui illustre la connexité des plaques 1 et 5. On a représenté par 31 un joint d'étanchéité disposé entre la première plaque 1 et le châssis 14, et par 32 la partie de la cavité close qui s'étend entre les deux plaques 1 et 5. Le détecteur 6 se trouvant devant l'empreinte 12 n'a pas été représenté. La cavité close comprend encore l'intérieur du tube 4 et le moyen de prise de vide peut être établi dans une enceinte 33 située du côté opposé de ce tube 4.

On rappelle que l'invention n'est pas limitée à cette application mais s'étend au contraire éventuellement à tous les dispositifs comprenant une paire de pièces mobiles l'une de l'autre et entre lesquelles la pression est moins importante qu'à l'extérieur, de sorte que la pression différentielle tend à écraser les pièces l'une sur l'autre ; et qu'elle n'est pas non plus limitée au vide, la pression entre les pièces pouvant être une pression partielle.

## Revendications

1. Dispositif de déplacement relatif de deux pièces assurant le maintien d'un différentiel de pression positif entre un lieu extérieur aux pièces et un lieu à pression plus petite situé entre les pièces, **caractérisé en ce que** les pièces comprennent des plaques (1, 5) déplaçables parallèlement l'une devant l'autre, l'une des plaques (1) est polie et l'autre des plaques (5) comporte un joint non déformable (29) qui contient une réserve de lubrifiant (28) et est comprimé entre les plaques.

2. Dispositif suivant la revendication 1, **caractérisé en ce que** le joint non déformable a un contour continu.

3. Dispositif suivant la revendication 1 ou 2, **caractérisé en ce qu'**il comprend un deuxième joint (24), souple, ayant un écrasement limité par le joint non déformable et un contour continu, et qui est aussi comprimé entre les plaques.

4. Dispositif suivant la revendication 3, **caractérisé en ce que** le deuxième joint est situé à une région plus centrale de plaques que le joint non déformable.

5. Dispositif suivant la revendication 3 ou 4, **caractérisé en ce que** le deuxième joint est porté par l'autre des plaques (5).

6. Dispositif suivant l'une quelconque des revendications 1 ou 2, **caractérisé en ce que** la réserve de lubrifiant est constituée par une cavité (28) s'ouvrant vers la plaque polie.

7. Dispositif suivant l'une quelconque des revendications 1 ou 2, **caractérisé en ce que** le joint non déformable s'appuie sur la plaque polie par au moins une face plane (26, 27).

8. Dispositif suivant l'une quelconque des revendications 1 à 7, **caractérisé en ce qu'**il comporte un troisième joint (30) comprimé entre les plaques, non déformable, rectiligne, s'étendant à une région centrale des pièces et ayant une longueur orientée dans une direction du déplacement relatif.

9. Dispositif suivant l'une quelconque des revendications 1 à 8, **caractérisé en ce qu'**il comprend des mécanismes coulissants entre les pièces, qui permettent le déplacement relatif.

10. Dispositif suivant l'une quelconque des revendications précédentes, **caractérisé en ce qu'**il est un dispositif de permutation de détecteurs (6, 7), et les pièces comprennent respectivement un lieu de mesure (2) et des empreintes (8, 9) recevant au moins des extrémités de mesure des détecteurs, les empreintes étant alternativement placées devant le lieu de mesure par le déplacement relatif.

## Patentansprüche

1. Vorrichtung zum relativen Verlagern von zwei Teilen, welche das Beibehalten eines positiven Drucks zwischen einem Raum außerhalb der Teile und einem Raum mit niedrigerem Druck, welcher zwischen den Teilen liegt, sicherstellt, **dadurch gekennzeichnet, dass** die Teile Platten (1, 5) umfassen, welche parallel voreinander verlagerbar sind, wobei eine der Platten (1) poliert ist und die andere der Platten (5) eine nicht verformbare Dichtung (29) umfasst, welche einen Schmierstoff-Vorrat (28) enthält und zwischen den Platten komprimiert ist.

2. Vorrichtung nach Anspruch 1, **dadurch gekennzeichnet, dass** die nicht verformbare Dichtung einen durchgehenden Umriss hat.

3. Vorrichtung nach Anspruch 1 oder 2, **dadurch gekennzeichnet, dass** sie eine zweite, elastische Dichtung (24) umfasst, welche eine durch die nicht verformbare Dichtung begrenzte Quetschung und einen durchgehenden Umriss aufweist, und welche ebenfalls zwischen den beiden Platten komprimiert ist.

4. Vorrichtung nach Anspruch 3, **dadurch gekennzeichnet, dass** die zweite Dichtung in einem zentraleren Abschnitt der Platten angeordnet ist als die nicht verformbare Dichtung.

5. Vorrichtung nach Anspruch 3 oder 4, **dadurch gekennzeichnet, dass** die zweite Dichtung von der anderen der Platten (5) getragen ist.

6. Vorrichtung nach einem der Ansprüche 1 oder 2, **dadurch gekennzeichnet, dass** der Schmierstoff-Vorrat durch einen Hohlraum (28) gebildet ist, welcher sich in Richtung der polierten Platte öffnet.

7. Vorrichtung nach einem der Ansprüche 1 oder 2, **dadurch gekennzeichnet, dass** die nicht verformbare Dichtung gegen die polierte Platte mittels wenigstens einer ebenen Fläche (26, 27) anliegt.

8. Vorrichtung nach einem der Ansprüche 1 bis 7, **dadurch gekennzeichnet, dass** sie eine dritte zwischen den Platten komprimierte, rechteckige, verformbare Dichtung (30) umfasst, welche sich zu einem zentralen Bereich der Teile erstreckt und eine Länge aufweist, welche in eine Richtung der relativen Verlagerung orientiert ist.

9. Vorrichtung nach einem der Ansprüche 1 bis 8, **dadurch gekennzeichnet, dass** sie Schiebemechanismen zwischen den Teilen umfasst, welche die relative Verlagerung erlauben.

10. Vorrichtung nach einem der vorhergehenden Ansprüche, **dadurch gekennzeichnet, dass** sie eine Vorrichtung zum Tauschen von Detektoren (6, 7) ist, und die Teile jeweils einen Messbereich (2) und Vertiefungen (8, 9) umfassen, welche wenigstens die Messenden der Detektoren aufnehmen, wobei die Vertiefungen durch die relative Verlagerung abwechselnd vor den Messbereich platziert werden.

## Claims

1. A device for the relative displacement of two parts maintaining a positive pressure differential between a location outside of the parts and a location having a lower pressure located between the parts, **characterised in that** the parts comprise plates (1, 5) displaceable in parallel in front of each other, one of the plates (1) is polished and the other plate (5) includes a non-deformable joint (29) which contains a lubricant reservoir (28) and is compressed between the plates.

2. The device according to claim 1, **characterised in that** the non-deformable joint has a continuous contour.

3. The device according to claim 1 or 2, **characterised in that** it comprises a second joint (24), which is flexible, having a collapse restricted by the non-deformable joint and a continuous contour, and which is also compressed between the plates.

4. The device according to claim 3, **characterised in that** the second joint is located at a more central plate region than the non-deformable joint.

5. The device according to claim 3 or 4, **characterised in that** the second joint is carried by the other plate (5).

6. The device according to any of claims 1 or 2, **characterised in that** the lubricant reservoir consists of a cavity (28) opening to the polished plate.

7. The device according to any of claims 1 or 2, **characterised in that** the non-deformable joint bears against the polished plate through at least one planar face (26, 27).

8. The device according to any of claims 1 to 7, **characterised in that** it includes a third joint (30) compressed between the plates, which is non-deformable, rectilinear, extending to a central region of the parts and having a length directed along a direction of relative displacement.

9. The device according to any of claims 1 to 8, **characterised in that** it comprises sliding mechanisms between the parts, which allow the relative displacement.

10. The device according to any of the preceding claims, **characterised in that** it is a detector permuting device (6, 7), and the parts respectively comprise a measuring location (2) and footprints (8, 9) receiving at least detector measuring ends, the footprints being alternately placed in front of the measuring location by the relative displacement.
